# FASCICULE DE BREVET EUROPEEN

(11) **EP 1 717 459 B1**
(45) Date de publication et mention de la délivrance du brevet: **03.12.2008**
(21) Numéro de dépôt: 06290568.2
(22) Date de dépôt: 06.04.2006
(51) Int. Cl.: F16B 37/04, B29C 45/16

(54) **Dispositif de fixation d'une pièce à un panneau comportant un ensemble formé par un organe de cage et un organe d'insert et procédé de réalisation d'un tel ensemble**
Vorrichtung zum Befestigen eines Bauteils an einer Platte enthaltend eine Anordnung aus einem Käfig und einem Einsatz und Verfahren zum Herstellen einer solchen Anordnung
Device for fixing a member to a panel comprising an assembly made out of a cage and an insert and method for manufacturing said assembly

(30) Priorité: 28.04.2005 FR 0504299
(43) Date de publication de la demande: 02.11.2006
(73) Titulaire: MÖLLERTECH SAS, 91370 Verrières le Buisson (FR)
(72) Inventeur: Chausset, François, 36250 Saint Maur (FR)
(74) Mandataire: Delaveau, Sophie

(56) Documents cités:
- DE-A1- 10 104 949
- FR-A- 2 702 808
- US-A- 4 885 121

## Description

L'invention concerne un dispositif de fixation d'une pièce à un panneau, du type comprenant un organe formant cage solidarisable au panneau, en étant inséré dans un trou, un insert bloqué coaxialement dans la cage et pourvu d'un alésage axial de réception d'une vis de fixation de ladite pièce et des moyens de liaison entre la cage et l'insert formés par des crantages disposés respectivement sur les surfaces en contact l'une de l'autre de l'insert et de la cage et qui sont en engagement mutuel. .

Les dispositifs de fixation de ce type, qui sont connus, voir par exemple le document DE 101 04 949 A, présentent l'inconvénient que leur réalisation est compliquée, notamment en ce qui concerne les moyens de liaison, ce qui a pour conséquence un prix de revient élevé.

La présente invention a pour but de palier cet inconvénient.

Pour atteindre ce but, le dispositif de fixation selon l'invention est tel que caractérisé dans la revendication 1. L'invention concerne également un outillage de fabrication du dit dispositif de fixation tel que revendiqué à la revendication 7..

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un dispositif de fixation selon l'invention, le montrant à l'état de fixation d'une pièce à un panneau ;
- la figure 2 est une vue en perspective explosée du dispositif selon la figure 1 ;
- la figure 3 est une vue en coupe et en perspective de la cage 1 de la figure 2, selon la ligne III-III ;
- la figure 4 est une vue en coupe de la figure 1 selon la ligne IV-IV, et
- la figure 5 est une vue similaire à la figure 4, mais montre le dispositif dans sa position fusible, et
- les figures 6A à 6D illustrent le procédé de réalisation de la cage et de l'insert du dispositif de fixation selon l'invention par injection bimatière.

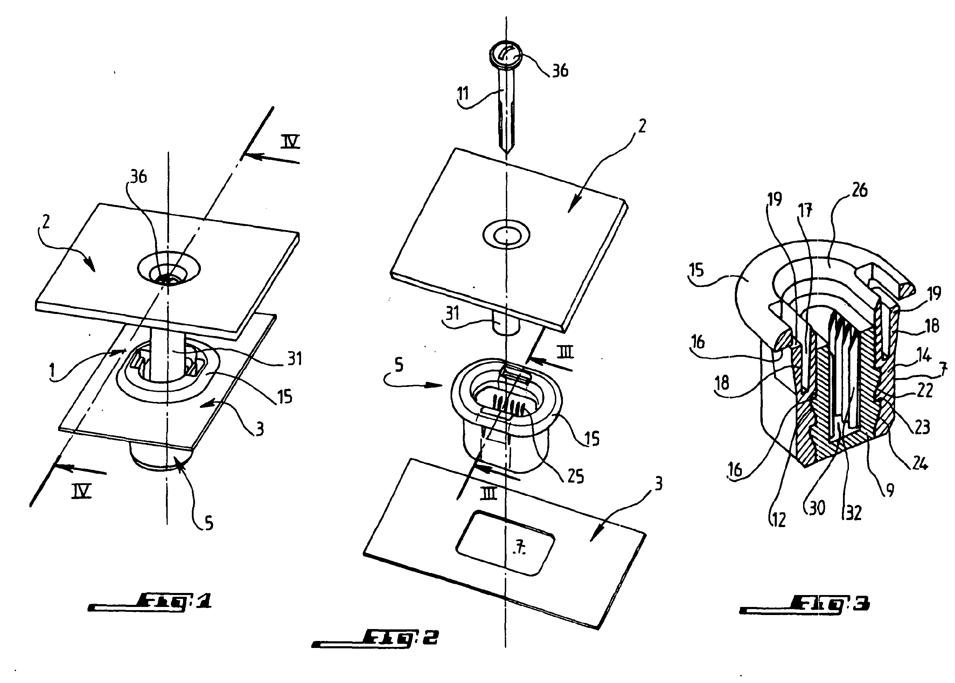

La figure 1 montre le dispositif de fixation selon l'invention, désigné de façon générale par le numéro de référence 1, dans sa position de fixation d'une pièce 2 à un panneau 3 tel qu'une tôle.

Le dispositif de fixation 1 comporte essentiellement un organe 5 formant cage, inséré dans une découpe 7 du panneau 3 et destiné à loger un insert 9 de réception d'une vis de fixation 11 de la pièce 2 au panneau 3. On décrira ci-après plus en détail les différents organes constitutifs du dispositif de fixation 1.

La cage 5 comporte un corps tubulaire 14, de forme générale cylindrique, à section transversale ovale, pourvu à son extrémité supérieure d'un rebord 15 latéralement en saillie vers l'extérieur et dont la face 16 tournée vers le corps est configurée pour former un épaulement d'appui par lequel la cage prend appui sur le panneau 3, après son insertion dans la découpe 7 dont la forme correspond à celle du corps, rectangulaire dans l'exemple représenté.

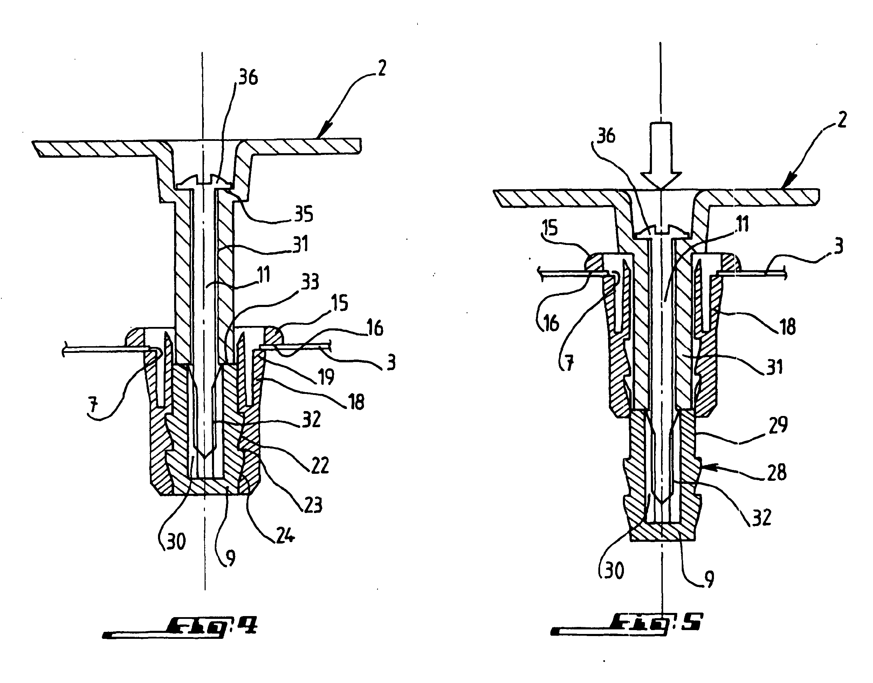

Comme on le voit sur la figure 3, les portions de la paroi du corps de cage 14, sur les côtés longs, présentent des découpes axiales 17 à partir du rebord 15 de façon que les parties extérieures de la paroi forment des languettes axiales 18 dont les extrémités supérieures 19 sont libres. Ces languettes sont élastiquement déformables entre une position de repos représentée sur les figures 4 et 5 dans laquelle les extrémités 19 sont latéralement décalées par rapport à la face externe du corps de façon à venir en prise sous le bord de la découpe 7, qui est alors pris en sandwich entre l'épaulement 16 et la face frontale 20 des extrémités des languettes, et une position élastiquement repoussée vers l'axe de la cage pour permettre l'insertion de celles-ci dans la découpe 7. Les languettes 18 accomplissent ainsi la fonction de clips de blocage de la cage dans la découpe du panneau.

La face interne du corps de cage 14 comporte, dans sa moitié inférieure en-dessus des languettes, un crantage 22 qui comprend, dans l'exemple représenté, deux crans annulaires axialement décalés, présentant chacun en haut, c'est-à-dire dans sa partie proche du panneau, un retrait en forme d'une marche 23 et, en-dessous, une partie en forme d'une rampe axiale 24, se rapprochant de l'axe de la cage dans la direction de l'extrémité libre de celle-ci.

Il est encore à noter que la face interne de la cage, à son extrémité formée par le rebord d'appui 15, est chanfreiné en 26 pour assurer un précentrage lors de la fixation de la pièce 2 sur le panneau 3.

Comme le montrent clairement les figures 4 et 5, l'insert 9 retenu coaxialement dans la cage 7 présente une face extérieure complémentaire à celle de la face interne de la cage. Par conséquent, sa face extérieure comporte un crantage 28 complémentaire au crantage 22 de la cage. Sa partie supérieure 29 est lisse et s'applique contre la face interne également lisse de la cage.

L'insert 9 est pourvu d'un alésage axial 30 pourvu de rainures axiales 32 de réception de la vis 11 de fixation de la pièce 2, cette dernière comprenant pour le guidage de la vis un embout tubulaire 31 dont la face d'extrémité inférieure, en position de fixation de la pièce sur le panneau, est maintenue par la vis 11 en contact pressé sur la face frontale d'extrémité 33 de l'insert 9. L'embout de guidage 31 comporte, au niveau de sa naissance, un épaulement 35 sur lequel prend appui la tête 36 de la vis 11.

Il ressort de la description qui précède et des figures que l'insert 9 qui reçoit la vis 11 constitue l'interface de la fixation de la pièce 2 sur le panneau 3. Il est emprisonné dans la cage 5 et maintenu en position par les crantages complémentaires 22 et 28 dont la forme ne permet pas à l'insert de se déplacer vers la pièce au moment du vissage de la vis 11 dans l'insert, grâce aux marches des crantages qui empêchent tout mouvement de l'insert, dans la cage, axialement vers le haut. Seulement, grâce aux rampes des crantages, un déplacement de l'insert dans la direction opposée, c'est-à-dire la direction d'enfoncement, est possible lorsque la force d'enfoncement dépasse une valeur de seuil prédéterminée. Le dimensionnement des crantages est déterminé en fonction de la résistance aux efforts d'enfoncement souhaités. C'est la fonction fusible.

Selon une caractéristique essentielle de l'invention, la cage 5 et l'insert 9 sont issus d'un outillage d'injection bimatière, ce qui permet d'obtenir en une seule fois la cage et l'insert à base de matériaux dont les caractéristiques mécaniques et physiques sont de natures différentes. Pour obtenir la séparation de l'insert, de la cage, c'est-à-dire l'effet fusible, représenté sur la figure 5, on utilise deux matériaux plastiques non adhérents entre eux, avec pour la cage des caractéristiques mécaniques élastiques plus importantes que pour l'insert.

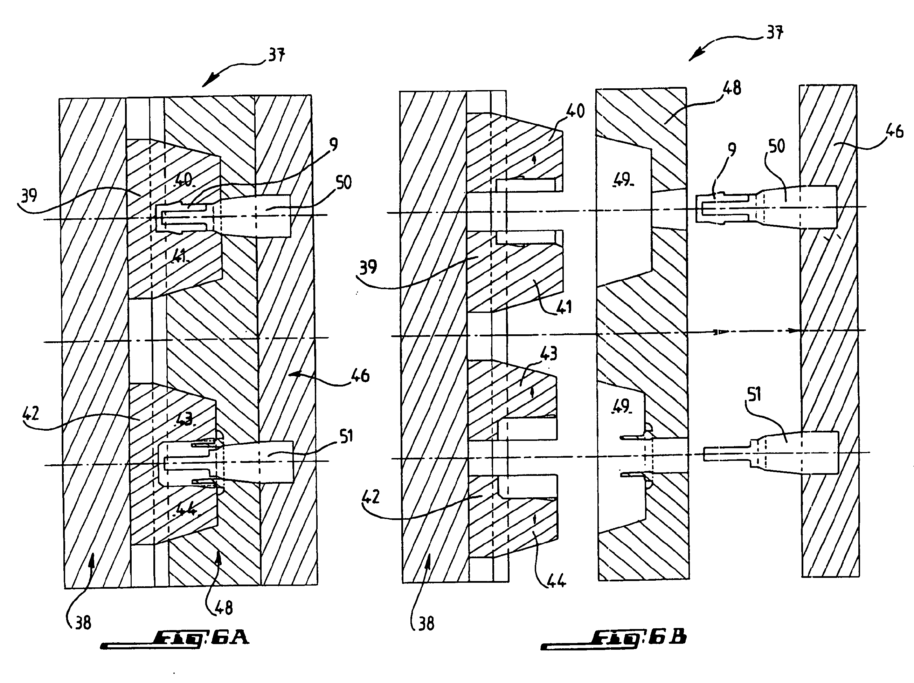

Les figures 6A à 6D illustrent, de façon schématique, un procédé de fabrication de l'ensemble formé par la cage 5 surmoulée sur l'insert 9, à l'aide d'un moule spécifique 37 également représenté sur les figures. Ce moule comporte essentiellement une partie de noyau fixe 38 qui porte un dispositif 39 à coulisseaux 40, 41 pour le moulage de l'insert 9 et un dispositif 42 à coulisseaux 43, 44 pour le moulage de la cage 5, ainsi qu'une partie de noyau 46, mobile en translation et rotatif, destinée à permettre l'ouverture et la fermeture du moule, et, interposée entre les noyaux fixe 38 et mobile 46, une partie 48 formant lunette mobile. Les coulisseaux 40, 41 du dispositif de moulage 39 de l'insert sont mobiles entre une position de fermeture, permettant le moulage de l'insert et une position ouverte permettant le retrait de l'insert. Les coulisseaux 43, 44 du dispositif 42 de moulage de la cage sont également mobiles entre une position de fermeture du dispositif permettant le moulage de la cage et une position d'ouverture pour le retrait de la cage après son moulage.

Les dispositifs de moulage d'insert et de cage formés chacun par une paire de coulisseaux présentent une forme extérieure tronconique s'élargissant en direction du noyau fixé, qui s'engagent chacun dans un évidement 49 de forme complémentaire pratiqué dans la lunette mobile 48. Dans la position fermée du moule et des dispositifs de moulage 39 et 42, ces derniers sont engagés par leurs coulisseaux dans les évidements de la lunette. Le recul de la lunette lors de l'ouverture du moule libère les coulisseaux de chaque dispositif qui peuvent alors s'écarter l'un de l'autre et assurer aussi l'ouverture des dispositifs de moulage.

On constate encore que le noyau mobile 46 comporte deux éléments de noyau mobiles 50, 51 de forme identique destinés à s'engager dans les dispositifs de moulage 39, 42 de l'insert et de la cage, comme cela sera décrit ci-après.

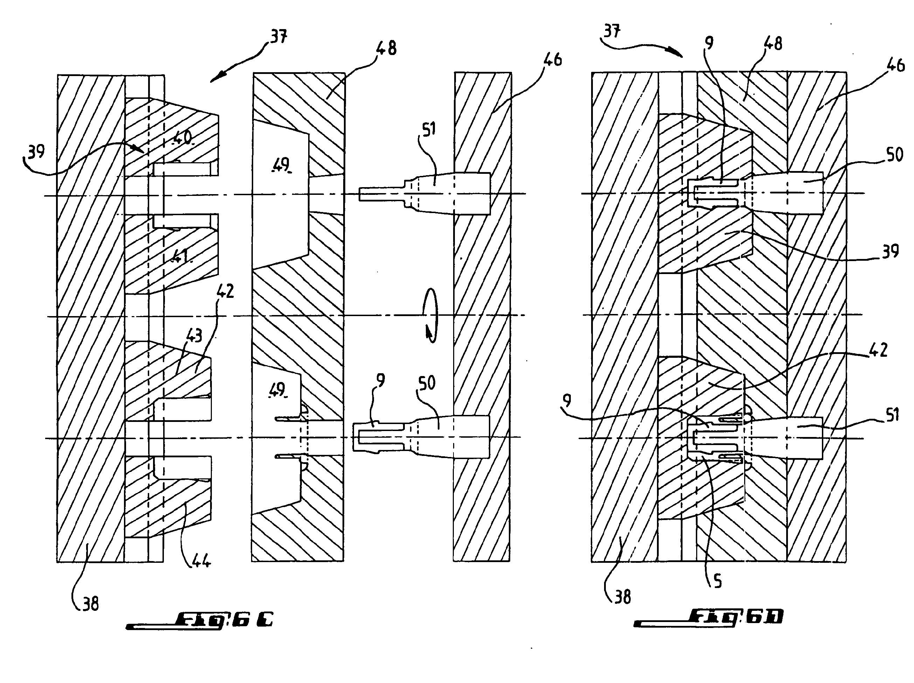

La figure 6A illustre une première phase du procédé de fabrication de l'ensemble formé par l'insert et la cage, à savoir la phase du moulage d'un insert 9. Le moule 37 ainsi que les dispositifs de moulage 39 et 42 sont fermés et les éléments de noyau mobiles 50, 52 engagés, l'un 50 dans le dispositif de moulage d'insert 39 et l'autre dans le dispositif de moulage de cage 42. La figure 6B illustre une phase suivante à laquelle le moule 37 est ouvert et qui est caractérisé par le recul du noyau mobile 46 et de la lunette 48, l'élément de noyau mobile 50 portant l'insert 9. Puis, comme le montre la figure 6C, le noyau mobile 46 est amené à effectuer un mouvement de rotation pour que l'insert 9 toujours engagé sur l'élément de noyau mobile 50 se présente dans sa position d'engagement dans le dispositif de moulage 42 de la cage 5. Ensuite on procède à la fermeture du moule 37. La figure 6D illustre cette phase du procédé. L'élément de noyau mobile 50, avec l'insert 9 supporté par cet élément est engagé dans le dispositif de moulage 42 et la cage 5 est réalisée par moulage, les dispositifs de moulage 39 et 42 étant fermés, avec rapprochement de leurs coulisseaux respectifs. L'élément de noyau mobile 51 est engagé dans le dispositif de moulage d'insert 39, ce qui permet le moulage d'un autre insert 9. Après la réalisation de la cage 5 par surmoulage sur l'insert 9 dans le dispositif de moulage 42 et la réalisation d'un autre insert 9 dans le dispositif 39, le moule est à nouveau ouvert, la cage surmoulée sur l'insert est démoulée et retirée et le noyau mobile 46 à nouveau amené à tourner dans une position dans laquelle l'insert 9 porté par l'élément noyau mobile 51 se trouve alors dans une position appropriée d'engagement dans le dispositif 42 de surmoulage de la cage sur l'insert après fermeture du moule.

## Revendications

1. Dispositif de fixation (1) d'une pièce (2) à un panneau (3), du type comprenant un organe formant cage (5) solidarisable au panneau (1), en étant inséré dans un évidement (7) du panneau (3), un insert (9) bloqué coaxialement dans la cage (5) et pourvu d'un alésage axial de réception d'une vis de fixation (11) de ladite pièce (2) et des moyens de liaison entre la cage (5) et l'insert (3), formés par des crantages (22, 28) disposés respectivement sur les surfaces en contact l'une de l'autre de l'insert et de la cage, et qui sont en engagement mutuel, **caractérisé en ce que** les moyens de liaison assurent la libération de l'insert (9) par rapport à la cage (5) en réponse à une force d'enfoncement de la vis supérieure à une valeur de seuil qui est fonction de la résistance aux efforts d'enfoncement générée par les éléments en relief, les moyens de liaison étant réalisés en une pièce avec la cage (5) et l'insert (9) et issus d'un outillage d'injection bimatière à partir de matières non adhérentes entre elles.

2. Dispositif de fixation selon la revendication 1, **caractérisé en ce que** les crantages sont configurés de façon à assurer un verrouillage axial dans le sens contraire à l'enfoncement de la vis, tout en permettant une séparation de l'insert, de la cage dans le sens inverse.

3. Dispositif de fixation selon la revendication 2, **caractérisé en ce que** les crantages (22, 28) comportent deux crans annulaires axialement décalés ayant des parties de rampe de glissement dans le sens de l'enfoncement de la vis.

4. Dispositif de fixation selon l'une des revendications 1 à 3, **caractérisé en ce que** la cage (5) est réalisée sous forme d'un organe tubulaire ayant un corps de cage (14) susceptible de traverser la découpe (7) du panneau (3) et pourvu de languettes (18) élastiquement déformables entre une position de prise en sandwich des bords de la découpe entre leurs extrémités (19, 20) et un rebord d'appui (15) à l'extrémité appropriée de la cage (5) et une position d'effacement élastique permettant le passage du corps (14) à travers la découpe (7).

5. Dispositif de fixation selon la revendication 5, **caractérisé en ce que** l'insert (9) comporte un alésage axial (30) pourvu de nervures axiales (32) pour la réception de la vis (11).

6. Dispositif de fixation selon l'une des revendications 1 à 6, **caractérisé en ce que** la pièce comporte un embout de guidage (31) de la vis (11), dont l'extrémité inférieure (33) prend appui sur la face frontale d'extrémité adjacente de l'insert lorsque la vis de fixation (11) est introduite dans l'insert (9).

7. Outillage de fabrication d'un dispositif comportant une cage (5) surmoulée sur un insert (9) selon l'une des revendications 1 à 6, par injection bimatière, **caractérisé en ce qu'**il comprend un moule (37) comportant un noyau fixe (38) porteur d'au moins un dispositif (39) de moulage d'insert (9) et au moins un dispositif (42) de moulage de cage (5), un noyau mobile (46) entre des positions de fermeture et d'ouverture du moule (37), porteur d'au moins deux éléments de noyau mobile (50, 51) engageable chacun dans un dispositif de moulage d'insert (39) et un dispositif de moulage de cage (42) par rotation du noyau mobile (46), chaque élément de noyau mobile définissant avec le dispositif de moulage de l'insert (39) lorsque engagé dans ce dispositif (39), une cavité d'injection de forme complémentaire de la paroi externe de l'insert (9) pourvue des éléments en relief.

8. Outillage selon la revendication 7, de fabrication du dispositif selon la revendication 4 ou 5, dans lequel chaque élément de noyau mobile portant un insert (39) définit avec le dispositif de moulage de cage (42) lorsque engagé avec l'insert (39) dans ce dispositif (42), une cavité d'injection de forme complémentaire de la paroi externe de la cage (5).

## Claims

1. A device (1) for fixing a part (2) to a panel (3) of the type comprising a cage element (5), which can be made integral with the panel (1) by being inserted into a cutout (7) of the panel (3), an insert (9) coaxially wedged into the cage (5) and provided with an axial bore for receiving a fixing screw (11) of said part (2), and linking means between the cage (5) and the insert (9), formed by serrations (22, 28) arranged respectively on the mutually contacting surfaces of the insert and the cage, and which are in mutual engagement, **characterized in that** the linking means ensure releasing of the insert (9) with respect to the cage (5) as a reaction to a driving force of the screw greater than a threshold value, which is dependent on the resistance to driving forces generated by the relief elements, with the linking means being realized integrally with the cage (5) and the insert (9) and resulting from a bi-material injection die while being made of materials which do not adhere together.

2. The fixing device according to claim 1, **characterized in that** the serrations are configured in order to ensure axial locking in the direction opposite to driving of the screw, while allowing for the insert to be separated from the cage, in the opposite direction.

3. The fixing device according to claim 2, **characterized in that** the serrations (22, 28) comprise two axially shifted annular notches having slide ramp parts in the driving direction of the screw.

4. The fixing device according to any of claims 1 to 3, **characterized in that** the cage (5) is realized as a tubular member having a cage body (14) able to go through the cutout (7) of the panel (3) and provided with tabs (18) which are elastically deformable between a sandwiched position of the edges of the cutout between their ends (19, 20) and a supporting rim (15) at the appropriate end of the cage (5) and an elastic retracting position allowing for the body (14) to go through the cutout (7).

5. The fixing device according to claim 5, **characterized in that** the insert (9) has an axial bore (30) provided with axial ribs (32) for receiving the screw (11).

6. The fixing device according to any of claims 1 to 6, **characterized in that** the part comprises a fitting (31) for guiding the screw (11), the lower end (33) of which rests on the end front side adjacent to the insert when the fixing screw (11) is entered into the insert (9).

7. A tool for manufacturing a device comprising a cage (5) overmolded on an insert (9) according to any of claims 1 to 6, by bi-material injection, **characterized in that** it comprises a mold (37) having a fixed core (38) carrying at least one device (39) for molding an insert (9) and at least one device (42) for molding a cage (5), a core (46) being mobile between closing and opening positions of the mold (37), carrying at least two mobile core elements (50, 51), which can each be engaged in a device for molding an insert (39) and a device for molding a cage (42) through rotation of the mobile core (46), each mobile core element defining with the mold device of the insert (39) when it is engaged into this device (39) an injection cavity of complementary shape to the external wall of the insert (9) provided with relief elements.

8. The tool according to claim 7, for manufacturing the device according to claim 4 or 5, wherein each mobile core element carrying an insert (39) defines with the device for molding a cage (42), when it is engaged with the insert (39) into this device (42), an injection cavity of complementary shape to the external wall of the cage (5).

## Patentansprüche

1. Vorrichtung (1) zum Befestigen eines Teils (2) an einer Platte (3) von der Art umfassend ein Käfigelement (5), das mit der Platte (1) einstückig gemacht werden kann, indem es in einen Ausschnitt (7) der Platte (3) eingesetzt wird, einen Einsatz (9), der koaxial in dem Käfig (5) blockiert wird und mit einer Axialbohrung versehen ist, um eine Befestigungsschraube (11) des Teils (2) aufzunehmen, und Verbindungsmittel zwischen dem Käfig (5) und dem Einsatz (9), die durch Rastvorrichtungen (22, 28) gebildet werden, die jeweils auf sich berührenden Oberflächen des Einsatzes und des Käfigs angeordnet sind und die in gegenseitigem Eingriff stehen, **dadurch gekennzeichnet, dass** die Verbindungsmittel die Freigabe des Einsatzes (9) im Verhältnis zum Käfig (5) sicherstellen als Antwort auf eine Eintriebskraft der Schraube, die größer ist als ein Schwellenwert, der abhängig ist von dem Widerstand gegen die Eintriebskräfte, die von den erhabenen Elementen erzeugt werden, wobei die Verbindungsmittel mit dem Käfig (5) und dem Einsatz (9) einstückig gemacht werden und aus einem Bimaterial-Spritzwerkzeug stammen, und zwar aus Materialien, die nicht zusammenhaften.

2. Befestigungsvorrichtung nach Anspruch 1, **dadurch gekennzeichnet, dass** die Rastvorrichtungen ausgestaltet sind, um eine Axialsperre in der dem Eintreiben der Schraube entgegengesetzten Richtung sicherzustellen und dabei eine Trennung des Einsatzes vom Käfig in der entgegengesetzten Richtung ermöglichen.

3. Befestigungsvorrichtung nach Anspruch 2, **dadurch gekennzeichnet, dass** die Rastvorrichtungen (22, 28) zwei axial versetzte ringförmige Einkerbungen umfassen, die über Gleitrampenteile in der Eintriebsrichtung der Schraube verfügen.

4. Befestigungsvorrichtung nach einem der Ansprüche 1 bis 3, **dadurch gekennzeichnet, dass** der Käfig (5) als ein röhrenförmiges Element mit einem Käfigkörper (14) ausgebildet ist, das durch den Ausschnitt (7) der Platte (3) gehen kann und mit Laschen (18) versehen ist, die zwischen einer Einschubposition der Ränder des Ausschnitts zwischen ihren Enden (19, 20) und einem Stützflansch (15) an dem geeigneten Ende des Käfigs (5) und einer elastischen Rückzugsposition, die einen Durchgang des Körpers (14) durch den Ausschnitt (7) ermöglicht, elastisch verformbar sind.

5. Befestigungsvorrichtung nach Anspruch 5, **dadurch gekennzeichnet, dass** der Einsatz (9) eine Axialbohrung (30) aufweist, die mit Axialrippen (32) versehen ist, um die Schraube (11) aufzunehmen.

6. Befestigungsvorrichtung nach einem der Ansprüche 1 bis 6, **dadurch gekennzeichnet, dass** das Teil einen Ansatz (31) zum Führen der Schraube (11) umfasst, dessen unteres Ende (33) sich auf der vorderen Endseite neben dem Einsatz abstützt, wenn die Befestigungsschraube (11) in den Einsatz (9) eingeführt wird.

7. Werkzeug zum Herstellen einer Vorrichtung, die einen Käfig (5) umfasst, der auf einem Einsatz (9) angeformt ist, gemäß einem der Ansprüche 1 bis 6, durch Bimaterialeinspritzen, **dadurch gekennzeichnet, dass** es eine Form (37), die einen festen Kern (38) aufweist, der mindestens eine Vorrichtung (39) zum Formen eines Einsatzes (9) und mindestens eine Vorrichtung (42) zum Formen eines Käfigs (5) umfasst, einen Kern (46), der zwischen Verschluss- und Öffnungspositionen der Form (37) bewegbar ist und mindestens zwei bewegbare Kernelemente (50, 51) trägt, die jeweils mit einer Vorrichtung zum Formen des Einsatzes (39) und einer Vorrichtung zum Formen eines Käfigs (42) durch Drehen des bewegbaren Kerns (46) in Eingriff gebracht werden können, wobei jedes bewegbare Kernelement mit der Formvorrichtung des Einsatzes (39), wenn sie mit dieser Vorrichtung (39) in Eingriff steht, eine Einspritzaufnahme mit zur Außenwand des Einsatzes (9) passender Form bildet, der mit erhabenen Elementen versehen ist, umfasst.

8. Werkzeug nach Anspruch 7, zum Herstellen der Vorrichtung nach Anspruch 4 oder 5, wobei jedes bewegbare Kernelement, das einen Einsatz (39) trägt, mit der Vorrichtung zum Formen des Käfigs (42), wenn sie mit dem Einsatz (39) in dieser Vorrichtung (42) in Eingriff steht, eine Einspritzaufnahme mit zur Außenwand des Käfigs (5) passender Form bildet.
